# EUROPÄISCHE PATENTSCHRIFT

(11) **EP 4 201 743 B1**
(45) Veröffentlichungstag und Bekanntmachung des Hinweises auf die Patenterteilung: **10.07.2024**
(21) Anmeldenummer: 21217000.5
(22) Anmeldetag: 22.12.2021
(51) Int. Cl.: B60Q 1/26, B60Q 1/32

(54) **BODENBELEUCHTUNGSMODUL FÜR EIN KRAFTFAHRZEUG ZUR ERZEUGUNG EINER BODEN-LICHTVERTEILUNG**
FLOOR LIGHTING MODULE FOR A MOTOR VEHICLE FOR GENERATING FLOOR LIGHTING DISTRIBUTION
MODULE D'ÉCLAIRAGE AU SOL POUR UN VÉHICULE AUTOMOBILE DESTINÉ À LA GÉNÉRATION D'UNE DISTRIBUTION LUMINEUSE AU SOL

(43) Veröffentlichungstag der Anmeldung: 28.06.2023
(73) Patentinhaber: ZKW Group GmbH, 3250 Wieselburg (AT)
(72) Erfinder: Jackl, Christian, 3250 Wieselburg (AT); Zeuner, Markus, 3240 Mank (AT)
(74) Vertreter: Patentanwaltskanzlei Matschnig & Forsthuber OG

(56) Entgegenhaltungen:
- DE-A1- 102014 007 313
- DE-A1- 102015 006 656
- JP-B2- 4 619 278
- US-A- 4 809 137
- US-A1- 2019 163 196

## Beschreibung

Die Erfindung betrifft ein Bodenbeleuchtungsmodul für ein Kraftfahrzeug zur Erzeugung einer Boden-Lichtverteilung, mit welcher ein Untergrund seitlich und/oder unterhalb eines Kraftfahrzeugs beleuchtbar ist, wobei das Bodenbeleuchtungsmodul eingerichtet ist, die Boden-Lichtverteilung, um eine erste und eine von der ersten unterschiedliche zweite Achse, zu verstellen, wobei das Bodenbeleuchtungsmodul an einem Kraftfahrzeug befestigbar ist, wobei das Bodenbeleuchtungsmodul Folgendes umfasst:
- ein Leuchtmittel zur Erzeugung der Boden-Lichtverteilung,
- einen Leuchtmittelträger, an welchem das Leuchtmittel befestigt ist,
- eine Befestigungsvorrichtung zur Befestigung des Bodenbeleuchtungsmoduls an einem Kraftfahrzeug,
- ein Adapterelement, welches eingerichtet ist, die Verstellung der Boden-Lichtverteilung um die erste und die zweite Achse zu ermöglichen, wobei das Adapterelement an der Befestigungsvorrichtung drehbar um die erste Achse gelagert ist, wobei der Leuchtmittelträger an dem Adapterelement derart befestigt ist, dass eine Drehbewegung des Adapterelements um die erste Achse eine Drehung des Leuchtmittelträgers um die erste Achse bewirkt, und wobei der Leuchtmittelträger an dem Adapterelement drehbar um die zweite Achse gelagert ist.

Die Erfindung betrifft weiters ein System, umfassend zumindest zwei Bodenbeleuchtungsmodule.

Die Erfindung betrifft ferner ein Kraftfahrzeug, umfassend zumindest ein Bodenbeleuchtungsmodul oder ein System umfassend zumindest zwei Bodenbeleuchtungsmodule.

Im Stand der Technik sind verstellbare Bodenbeleuchtungsmodule bekannt. Das Dokument US4809137A stellt ein solches Modul dar. Ein Bodenbeleuchtungsmodul erzeugt üblicherweise eine Boden-Lichtverteilung bzw. ein Lichtbild, welches einen Untergrund seitlich eines Kraftfahrzeugs, an welchem das Bodenbeleuchtungsmodul befestigt ist, beleuchtet. Die Einstellung bzw. die Verstellung der Boden-Lichtverteilung relativ zu dem Kraftfahrzeug erfolgt im Stand der Technik meist über Elektromotoren, welche eine die Bodenlichtverteilung erzeugende Lichtquelle des Bodenbeleuchtungsmoduls innerhalb eines Gehäuses des Bodenbeleuchtungsmoduls verschwenken. Die im Stand der Technik bekannten Einstellmechanismen sind jedoch oft fehleranfällig bzw. in der Herstellung teuer.

Die Aufgabe der vorliegenden Erfindung besteht darin, die Nachteile des Standes der Technik zu lindern bzw. zu beseitigen. Die Erfindung setzt sich daher insbesondere zum Ziel, ein Bodenbeleuchtungsmodul mit einem verbesserten Einstellmechanismus zu schaffen.

Diese Aufgabe wird durch ein Bodenbeleuchtungsmodul mit den Merkmalen von Anspruch 1 gelöst. Bevorzugte Ausführungen sind in den abhängigen Ansprüchen angegeben.

Erfindungsgemäß weist das Adapterelement eine kreisrunde Aufnahmeöffnung auf, wobei die Befestigungsvorrichtung einen zu der Aufnahmeöffnung komplementär ausgebildeten Aufnahmeabschnitt aufweist, wobei die Befestigungsvorrichtung über den Aufnahmeabschnitt in der Aufnahmeöffnung aufgenommen ist,
wobei die Aufnahmeöffnung einen Halteabschnitt und die Befestigungsvorrichtung einen zu dem Halteabschnitt korrespondieren Gegenabschnitt aufweist, wobei der Halteabschnitt und der Gegenabschnitt derart zueinander ausgebildet sind, dass, in einem Aufnahmezustand, in dem der Aufnahmeabschnitt der Befestigungsvorrichtung in der Aufnahmeöffnung des Adapterelements aufgenommen ist, der Halteabschnitt mit dem Gegenabschnitt derart in Eingriff ist, dass das Adapterelement gegen eine Bewegung entlang der ersten Drehachse gesichert ist,
wobei die kreisrunde Aufnahmeöffnung entlang ihres Umfangs zumindest abschnittweise radial zur ersten Achse verlaufende Zähne aufweist, wobei die Zähne derart ausgestaltet und dazu eingerichtet sind, mit einem Gegenelement zusammenzuwirken, wobei das Gegenelement derart in Eingriff mit den Zähnen bringbar ist, sodass eine von dem Gegenelement ausführbare Drehbewegung um die erste Achse eine Drehbewegung des Adapterelements relativ zu dem Befestigungselement induzieren kann.

Dadurch ergibt sich der Vorteil, dass die Verstellung der Boden-Lichtverteilung um die erste und die zweite Achse besonders einfach erfolgen kann. Durch die Verstellung bzw. Verschwenkung des Leuchtmittelträgers um die erste und zweite Achse kann die Position der Boden-Lichtverteilung relativ zu einem Kraftfahrzeug, an welchem das Bodenbeleuchtungsmodul befestigt sein kann, verstellt bzw. verschwenkt werden. Die Aufnahmeöffnung des Adapterelement und der Aufnahmeabschnitt der Befestigungsvorrichtung sind insbesondere über eine Drehkranz-Verbindung miteinander verbunden, bzw. kann die Übertragung der Drehbewegung des Gegenelements auf das Adapterelement über die Drehkranz-Verbindung erfolgen. Dadurch ergibt sich der Vorteil, dass die Drehung des Adapterelements relativ zu der Befestigungsvorrichtung besonders einfach und gut steuerbar erfolgen kann. Das Bodenbeleuchtungsmodul ist insbesondere an einer Unterseite eines Kraftfahrzeugs befestigbar.

Es kann vorgesehen sein, dass die von dem Gegenelement ausführbare Drehbewegung eine gleichgerichtete Drehbewegung des Adapterelements relativ zu dem Befestigungselement induzieren kann.

Es kann vorgesehen sein, dass das Adapterelement zumindest einen Leuchtmittelträger-Haltebereich aufweist, wobei der Leuchtmittelträger-Haltebereich einen ersten Halteschenkel und einen zweiten Halteschenkel aufweist, wobei der Leuchtmittelträger, in einem Haltezustand, zwischen dem ersten Halteschenkel und dem zweiten Halteschenkel derart gehalten wird, dass der Leuchtmittelträger gegen eine Bewegung entlang der zweiten Achse gesichert ist, wobei in dem Haltezustand der Leuchtmittelträger mit dem ersten Halteschenkel und dem zweiten Halteschenkel derart in Eingriff ist, dass der Leuchtmittelträger um die zweite Achse drehbar ist. Der erste Haltschenkel und der zweite Halteschenkel sind vorzugsweise an einem Randbereich um die Aufnahmeöffnung angeordnet. Vorzugsweise sind die beiden Halteschenkel diametral an der Aufnahmeöffnung angeordnet. Das Adapterelement kann eine Grundplatte aufweisen, welche die Aufnahmeöffnung aufweist, wobei sich die beiden Aufnahmeschenkel von der Grundplatte, im Wesentlichen parallel zur ersten Achse, weg erstrecken.

Es kann vorgesehen sein, dass sich der erste Halteschenkel und der zweite Halteschenkel von dem Halteabschnitt des Adapterelements, im Wesentlich entlang der ersten Achse, weg erstrecken.

Es kann vorgesehen sein, dass der erste Halteschenkel eine erste Halteöffnung und der zweite Halteschenkel eine zweite Halteöffnung aufweist, wobei der Leuchtmittelträger einen ersten Haltevorsprung und einen zweiten Haltevorsprung aufweist, wobei in dem Haltezustand der erste Haltevorsprung in der ersten Halteöffnung und der zweite Haltevorsprung in der zweiten Halteöffnung derart formschlüssig aufgenommen ist, dass der Leuchtmittelträger zwischen den beiden Halteschenkeln um die zweite Achse drehbar ist. Eine Positionsänderung der Haltvorsprünge innerhalb der Halteöffnung kann die Drehung des Leuchtmittelträgers um zweite Achse induzieren. Vorzugsweise sind die erste Halteöffnung und die zweite Halteöffnung als kreissegment-förmiges Langloch ausgestaltet. Die erste Halteöffnung und die zweite Haltöffnung sind vorzugsweise gleichartig ausgestaltet. Der erste Haltvorsprung und der zweite Haltevorsprung sind vorzugsweise gleichartig ausgestaltet. Der erste Haltvorsprung und der zweite Haltevorsprung sind insbesondere zu der ersten und zweiten Halteöffnung korrespondierend ausgestaltet.

Es kann vorgesehen sein, dass das Befestigungselement eine Einstellöffnung aufweist, über welche das Gegenelement, zur Indizierung der Drehbewegung auf das Adapterelement, mit den umfangseitig radial verlaufenden Zähnen der Aufnahmeöffnung in Eingriff gebracht werden kann. Das Gegenelement kann beispielsweise ein Schraubenzieher sein.

Es kann vorgesehen sein, dass die erste Achse und die zweite Achse im Wesentlichen orthogonal zueinander orientiert sind.

Es kann vorgesehen sein, dass in einem Zustand, in dem das Bodenbeleuchtungsmodul an einem Kraftfahrzeug angebracht ist, die erste Achse im Wesentlichen vertikal und die zweite Achse im Wesentlichen horizontal orientiert ist.

Es kann vorgesehen sein, dass das Adapterelement ein erstes Fixiermittel aufweist, welches dazu eingerichtet ist, einen ersten Drehwinkel, um welchen das Adapterelement relativ zu der Befestigungsvorrichtung drehbar ist, zu fixieren.

Es kann vorgesehen sein, dass das Adapterelement ein zweites Fixiermittel aufweist, welches dazu eingerichtet ist, einen zweiten Drehwinkel, um welchen der Leuchtmittelträger relativ zu dem Adapterelement drehbar ist, zu fixieren.

Es kann vorgesehen sein, dass die von dem Gegenelement ausführbare Drehbewegung um die erste Achse, zur Indizierung einer gleichgerichteten Drehbewegung auf des Adapterelement, manuell erfolgen kann. Die Drehbewegung des Gegenelements kann händisch, insbesondere ohne einem mechanischen oder elektrischen Antriebsmittel, ausgeführt werden.

Es kann vorgesehen sein, dass die Befestigungsvorrichtung ein Rastelement aufweist, welches dazu eingerichtet ist, das Bodenbeleuchtungsmodul über eine Rastverbindung an einem Kraftfahrzeug zu befestigen.

Es kann vorgesehen sein, dass das Rastelement zumindest eine Rastnase, vorzugsweise mehrere Rastnasen, aufweist, welche sich von dem Aufnahmeabschnitt der Befestigungsvorrichtung im Wesentlichen parallel zur ersten Achse weg erstrecken.

Es kann ein System, umfassend zumindest zwei Bodenbeleuchtungsmodule, vorgesehen sein, wobei ein erstes Bodenbeleuchtungsmodul zur Erzeugung einer ersten Boden-Lichtverteilung und ein zweites Bodenbeleuchtungsmodul zur Erzeugung einer zweiten Boden-Lichtverteilung eingerichtet ist, wobei vorzugsweise die erste Boden-Lichtverteilung und die zweite Boden-Lichtverteilung unterschiedlich ausgestaltet sind.

Es kann ein Kraftfahrzeug, umfassend zumindest ein Bodenbeleuchtungsmodul oder ein System, vorgesehen sein. Das Bodenbeleuchtungsmodul ist insbesondere an einer Unterseite des Kraftfahrzeugs befestigt.

Im Rahmen dieser Beschreibung sind die Begriffe "oben", "unten", "horizontal", "vertikal" als Angaben der Ausrichtung zu verstehen, wenn das Bodenbeleuchtungsmodul in normaler Benutzungsstellung angeordnet ist, nachdem es an einem Kraftfahrzeug, insbesondere an einer Unterseite eines Kraftfahrzeugs, befestigt wurde.

Die Erfindung wird nachstehend anhand eines bevorzugten Ausführungsbeispiels, auf das sie jedoch nicht beschränkt sein soll, noch weiter erläutert. In den Zeichnungen zeigt:
- Fig. 1: ein erfindungsgemäßes Bodenbeleuchtungsmodul;
- Fig. 2: eine Explosionsdarstellung des Bodenbeleuchtungsmoduls gemäß Fig. 1;
- Fig. 3: eine Detailansicht des Bodenbeleuchtungsmoduls gemäß Fig. 1;
- Fig. 4: eine Detailansicht eines Leuchtmittelträgers;
- Fig. 5: eine Ansicht eines Einstellvorgangs des Bodenbeleuchtungsmoduls gemäß Fig. 1;
- Fig. 6: ein Kraftfahrzeug mit drei Bodenbeleuchtungsmodulen; und
- Fig. 7: ein Kraftfahrzeug mit seitlichen Boden-Lichtverteilungen.

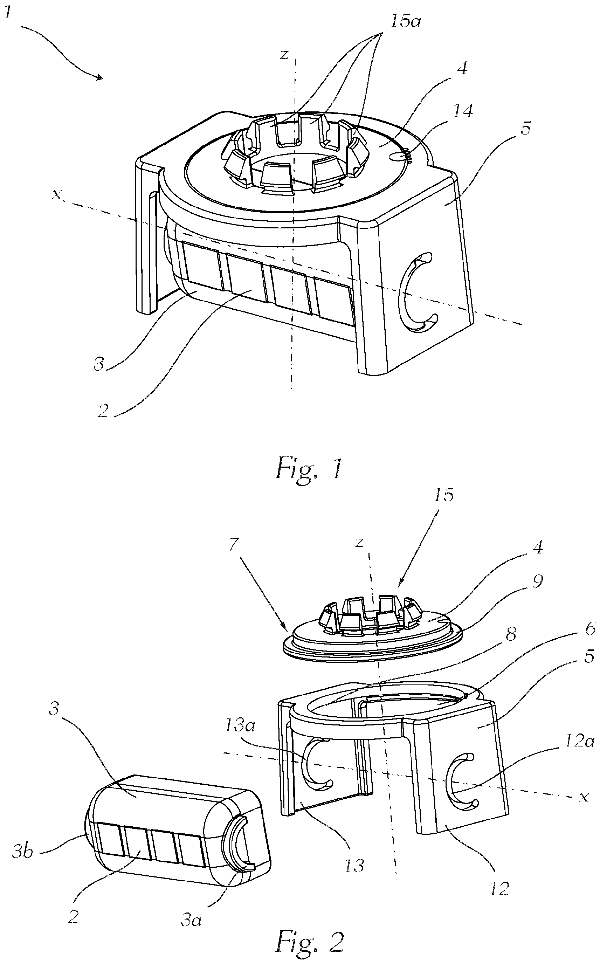

Fig. 1 zeigt ein Bodenbeleuchtungsmodul 1 für ein Kraftfahrzeug 17 zur Erzeugung einer Boden-Lichtverteilung 2a, mit welcher ein Untergrund seitlich und/oder unterhalb eines Kraftfahrzeugs 17 beleuchtbar ist. **Fig. 2** zeigt eine Explosionsdarstellung des Bodenbeleuchtungsmoduls 1. Das Bodenbeleuchtungsmodul 1 ist eingerichtet, die Boden-Lichtverteilung 2a um eine erste Achse z und eine von der ersten Achse z unterschiedliche zweite Achse x zu verstellen. Das Bodenbeleuchtungsmodul 1 ist an einem Kraftfahrzeug 17 befestigbar. Das Bodenbeleuchtungsmodul 1 umfasst ein Leuchtmittel 2 zur Erzeugung der Boden-Lichtverteilung 2a. In dem gezeigten Ausführungsbeispiel hat das Bodenbeleuchtungsmodul 1 vier Leuchtmittel 2, welche nebeneinander angeordnet sind. Das Leuchtmittel 2 kann eine Lichtquelle und eine der Lichtquelle zugeordnete Projektionsvorrichtung umfassen, wobei die Projektionsvorrichtung Licht, welches von der Lichtquelle erzeugbar ist, als Boden-Lichtverteilung 2a, beispielsweise auf einen Fahrbahnuntergrund, projizieren kann. Das Bodenbeleuchtungsmodul 1 umfasst weiters einen Leuchtmittelträger 3, an welchem das Leuchtmittel 2 befestigt ist und eine Befestigungsvorrichtung 4 zur Befestigung des Bodenbeleuchtungsmoduls 1 an einem Kraftfahrzeug 17. Das Bodenbeleuchtungsmodul 1 hat ferner ein Adapterelement 5, welches eingerichtet ist, die Verstellung der Boden-Lichtverteilung 2a um die erste z und die zweite Achse x zu ermöglichen. Das Adapterelement 5 ist an der Befestigungsvorrichtung 4 drehbar um die erste Achse z gelagert. Der Leuchtmittelträger 3 ist an dem Adapterelement 5 derart befestigt, dass eine Drehbewegung des Adapterelements 5 um die erste Achse z eine Drehung des Leuchtmittelträgers 3 um die erste Achse z bewirkt. Der Leuchtmittelträger 3 ist wiederum an dem Adapterelement 5 drehbar um die zweite Achse x gelagert. Die erste Achse z und die zweite Achse x sind im Wesentlichen orthogonal zueinander orientiert. In einem Zustand, in dem das Bodenbeleuchtungsmodul 1 an einem Kraftfahrzeug 17 angebracht ist, kann beispielsweise die erste Achse z eine vertikale Achse und die zweite Achse x eine horizontale Achse sein. Die erste Achse z kann in einem kartesischen Koordinatensystem die vertikal verlaufende z-Achse sein. Die zweite Achse x kann in einem kartesischen Koordinatensystem die horizontal verlaufende x-Achse sein, welche, in einem Zustand, in dem das Bodenbeleuchtungsmodul 1 an einem Kraftfahrzeug 17 angebracht ist, parallel zur Längsachse des Kraftfahrzeugs 17 orientiert ist.

Das Adapterelement 5 hat eine kreisrunde Aufnahmeöffnung 6, wobei die Befestigungsvorrichtung 4 einen zu der Aufnahmeöffnung 6 komplementär ausgebildeten Aufnahmeabschnitt 7 hat. Die Befestigungsvorrichtung 4 ist über den Aufnahmeabschnitt 7 in der Aufnahmeöffnung 6 aufgenommen.

Die Befestigungsvorrichtung 4 weist ein Rastelement 15 auf, welches dazu eingerichtet ist, das Bodenbeleuchtungsmodul 1 über eine Rastverbindung an einem Kraftfahrzeug 17 zu befestigen. In dem gezeigten Ausführungsbeispiel hat das Rastelement mehrere kreisförmig zueinander angeordnete Rastnasen 15a, welche sich von dem Aufnahmeabschnitt 7 der Befestigungsvorrichtung 4 im Wesentlichen parallel zur ersten Achse z weg erstrecken.

Die Aufnahmeöffnung 6 hat einen Halteabschnitt 8 und die Befestigungsvorrichtung 4 hat einen zu dem Halteabschnitt 8 korrespondieren Gegenabschnitt 9. Der Halteabschnitt 8 und der Gegenabschnitt 9 sind derart zueinander ausgebildet, dass, in einem Aufnahmezustand, in dem der Aufnahmeabschnitt 7 der Befestigungsvorrichtung 4 in der Aufnahmeöffnung 6 des Adapterelements 5 aufgenommen ist, der Halteabschnitt 8 mit dem Gegenabschnitt 9 derart in Eingriff ist, dass das Adapterelement 5 gegen eine Bewegung entlang der ersten Drehachse z gesichert ist.

Das Adapterelement 5 hat zumindest einen Leuchtmittelträger-Haltebereich, wobei der Leuchtmittelträger-Haltebereich einen ersten Halteschenkel 12 und einen zweiten Halteschenkel 13 umfasst. Der Leuchtmittelträger 3 wird in einem Haltezustand zwischen dem ersten Halteschenkel 12 und dem zweiten Halteschenkel 13 derart gehalten, dass der Leuchtmittelträger 3 gegen eine Bewegung entlang der zweiten Achse x gesichert ist. In dem Haltezustand ist der Leuchtmittelträger 3 mit dem ersten Halteschenkel 12 und dem zweiten Halteschenkel 13 derart in Eingriff, dass der Leuchtmittelträger 3 um die zweite Achse x drehbar ist. Der erste Halteschenkel 12 und der zweite Halteschenkel 13 erstrecken sich von dem Halteabschnitt 8 des Adapterelements 5, im Wesentlich entlang der ersten Achse z, weg.

Der erste Halteschenkel 12 hat eine erste Halteöffnung 12a und der zweite Halteschenkel 13 hat eine zweite Halteöffnung 13a, wobei der Leuchtmittelträger 3 einen ersten Haltevorsprung 3a und einen zweiten Haltevorsprung 3b hat. Im Haltezustand ist der erste Haltevorsprung 3a in der ersten Halteöffnung 12a und der zweite Haltevorsprung 3b in der zweiten Halteöffnung 13a derart formschlüssig aufgenommen, dass der Leuchtmittelträger 3 zwischen den beiden Halteschenkeln 12, 13 um die zweite Achse x drehbar ist. Die erste Halteöffnung 12a und die zweite Haltöffnung 13a sind als gekrümmt bzw. kreissegmentförmig verlaufendes Langloch ausgebildet.

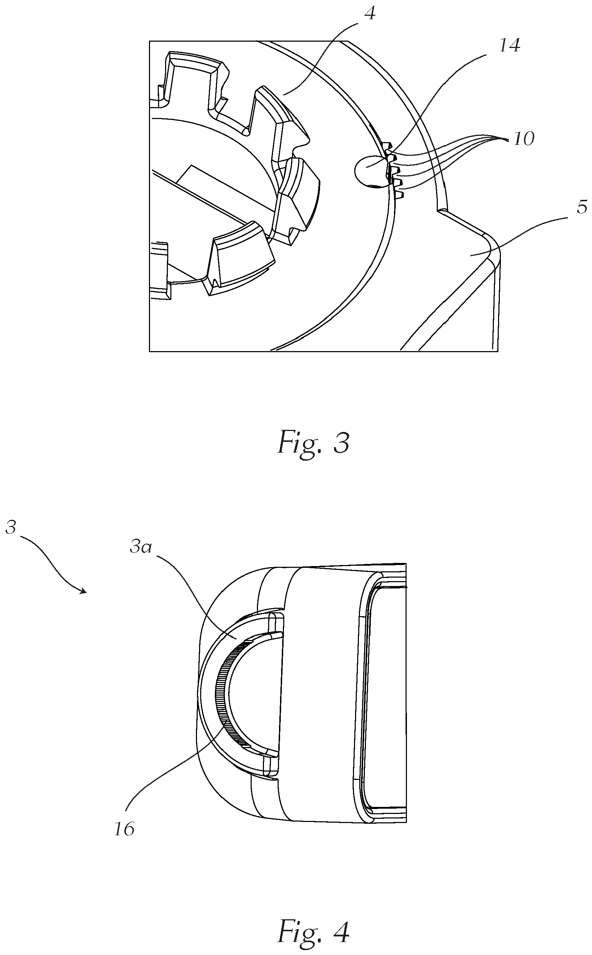

Wie in Fig. 3 ersichtlich, hat die kreisrunde Aufnahmeöffnung 6 entlang ihres Umfangs zumindest abschnittweise radial zur ersten Achse z verlaufende Zähne 10. Die Zähne 10 sind derart ausgestaltet und dazu eingerichtet, mit einem Gegenelement 11 zusammenzuwirken. Das Gegenelement 11 ist derart in Eingriff mit den Zähnen 10 bringbar, dass eine von dem Gegenelement 11 ausführbare Drehbewegung um die erste Achse z eine Drehbewegung des Adapterelements 5 relativ zu dem Befestigungselement 4 induzieren kann. Die von dem Gegenelement 11 ausführbare Drehbewegung induziert beispielsweise eine gleichgerichtete Drehbewegung des Adapterelements 5 relativ zu dem Befestigungselement 4. Das Befestigungselement 4 hat eine Einstellöffnung 14, über welche das Gegenelement 11, zur Indizierung der Drehbewegung auf das Adapterelement 5, mit den umfangseitig radial verlaufenden Zähnen 10 der Aufnahmeöffnung 6 in Eingriff gebracht werden kann. Die von dem Gegenelement 11 ausführbare Drehbewegung um die erste Achse z, zur Indizierung einer gleichgerichteten Drehbewegung auf des Adapterelement 5, kann insbesondere manuell erfolgen.

Das Adapterelement 5 hat vorzugsweise ein erstes Fixiermittel (nicht gezeigt), welches dazu eingerichtet ist, einen ersten Drehwinkel, um welchen das Adapterelement 5 relativ zu der Befestigungsvorrichtung 3 drehbar ist, zu fixieren. Das Adapterelement 5 hat vorzugsweise ein zweites Fixiermittel (nicht gezeigt), welches dazu eingerichtet ist, einen zweiten Drehwinkel, um welchen der Leuchtmittelträger 3 relativ zu dem Adapterelement 4 drehbar ist, zu fixieren.

Fig. 4 zeigt eine Detailansicht des der Leuchtmittelträgers 3. In dem gezeigten Ausführungsbeispiel ist der Leuchtmittelträger 3 als Gehäuse ausgebildet, in welchem das Leuchtmittel 2 aufgenommen ist. Der Leuchtmittelträger 3 hat an zwei gegenüberliegenden Seitenflächen jeweils einen Haltvorsprung 3a, 3b. Jeder Haltevorsprung 3a, 3b ist kreissegmentförmig ausgestaltet. An einer Innenseite des kreissegmentförmigen Haltevorsprungs 3a, 3b ist eine Rillenstruktur 16 ausgebildet, welche, zur Fixierung des Drehwinkels des Leuchtmittelträgers 3 relativ zu einem Halteschenkel 12, 13, mit entsprechenden Eingriffselementen an der Halteöffnung 12a, 13a eines Halteschenkels 12,13 in Eingriff bringbar ist.

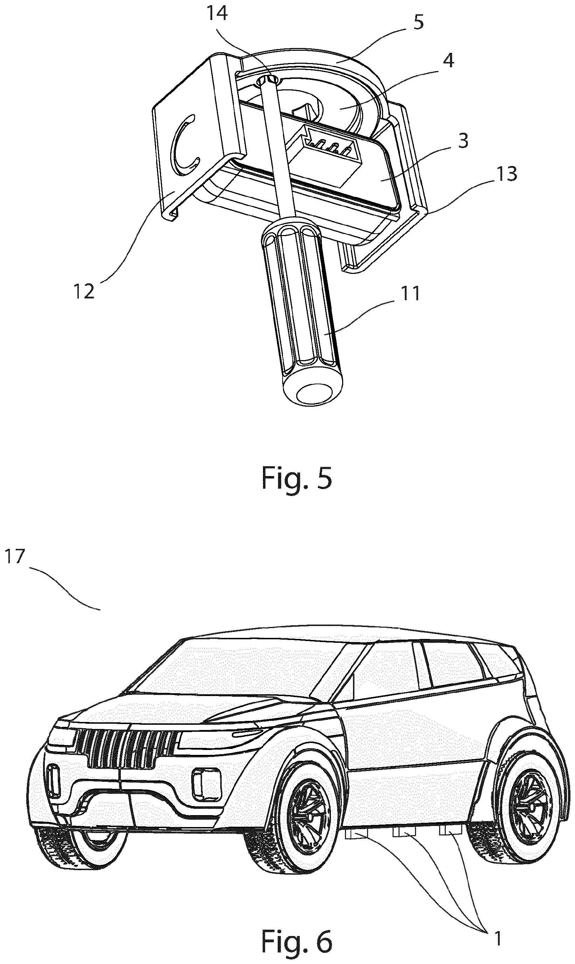

Fig. 5 zeigt das Gegenelement 11 in einem Zustand, in dem es in der Einstellöffnung 14 des Befestigungselements 4 aufgenommen ist. Die von dem Gegenelement 11 ausführbare Drehbewegung induziert eine gleichgerichtete Drehbewegung des Adapterelements 5 relativ zu dem Befestigungselement 4. Das Gegenelement 11 ist, zur Übertragung der Drehbewegung auf das Adapterelement 5, mit den umfangseitig radial verlaufenden Zähnen 10 der Aufnahmeöffnung 6 in Eingriff. Die von dem Gegenelement 11 ausführbare Drehbewegung um die erste Achse z kann insbesondere manuell erfolgen. Das Gegenelement 11 ist in dem gezeigten Ausführungsbeispiel ein Schraubenzieher.

Fig. 6 zeigt ein Kraftfahrzeug 17, an dessen Unterboden drei Bodenbeleuchtungsmodule 1 befestigt sind. Es können auch mehr oder weniger Bodenbeleuchtungsmodule 1 an dem Kraftfahrzeug 17 angebracht sein. Jedes Bodenbeleuchtungsmodul 1 kann eine oder mehrere Boden-Lichtverteilungen 2a erzeugen, welche über den oben beschriebenen Mechanismus relativ zu dem Kraftfahrzeug 17 verstellt bzw. verschwenkt werden können.

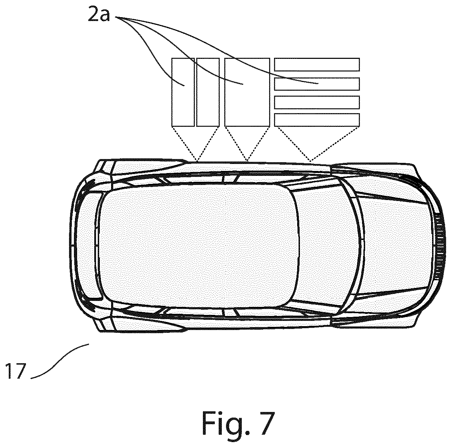

Fig. 7 zeigt ein Kraftfahrzeug 17 mit drei Bodenbeleuchtungsmodulen 1, wobei jedes Bodenbeleuchtungsmodul 1 unterschiedliche Boden-Lichtverteilungen 2a seitlich des Fahrzeugs 17 auf einen Untergrund abstrahlt. Über die Adapterelemente 5 der Bodenbeleuchtungsmodule 1 können die drei Boden-Lichtverteilungen 2a relativ zueinander verstellt werden.

## Patentansprüche

1. Bodenbeleuchtungsmodul (1) für ein Kraftfahrzeug zur Erzeugung einer Boden-Lichtverteilung (2a), mit welcher ein Untergrund seitlich und/oder unterhalb eines Kraftfahrzeugs beleuchtbar ist, wobei das Bodenbeleuchtungsmodul (1) eingerichtet ist, die Boden-Lichtverteilung (2a), um eine erste (z) und eine von der ersten unterschiedliche zweite Achse (x), zu verstellen, wobei das Bodenbeleuchtungsmodul (1) an einem Kraftfahrzeug befestigbar ist, wobei das Bodenbeleuchtungsmodul (1) Folgendes umfasst:
- ein Leuchtmittel (2) zur Erzeugung der Boden-Lichtverteilung (2a),
- einen Leuchtmittelträger (3), an welchem das Leuchtmittel befestigt ist,
- eine Befestigungsvorrichtung (4) zur Befestigung des Bodenbeleuchtungsmoduls (1) an einem Kraftfahrzeug,
- ein Adapterelement (5), welches eingerichtet ist, die Verstellung der Boden-Lichtverteilung (2a) um die erste Achse (z) und die zweite Achse (x) zu ermöglichen, wobei das Adapterelement (5) an der Befestigungsvorrichtung (4) drehbar um die erste Achse (z) gelagert ist, wobei der Leuchtmittelträger (3) an dem Adapterelement (5) derart befestigt ist, dass eine Drehbewegung des Adapterelements (5) um die erste Achse (z) eine Drehung des Leuchtmittelträgers (3) um die erste Achse (z) bewirkt, und wobei der Leuchtmittelträger (3) an dem Adapterelement (5) drehbar um die zweite Achse (x) gelagert ist,
wobei das Adapterelement (5) eine kreisrunde Aufnahmeöffnung (6) aufweist, wobei die Befestigungsvorrichtung (4) einen zu der Aufnahmeöffnung komplementär ausgebildeten Aufnahmeabschnitt (7) aufweist, wobei die Befestigungsvorrichtung (4) über den Aufnahmeabschnitt (7) in der Aufnahmeöffnung (6) aufgenommen ist,
wobei die Aufnahmeöffnung (6) einen Halteabschnitt (8) und die Befestigungsvorrichtung (4) einen zu dem Halteabschnitt (8) korrespondieren Gegenabschnitt (9) aufweist, **dadurch gekennzeichnet, dass** der Halteabschnitt (8) und der Gegenabschnitt (9) derart zueinander ausgebildet sind, dass, in einem Aufnahmezustand, in dem der Aufnahmeabschnitt (7) der Befestigungsvorrichtung (4) in der Aufnahmeöffnung (6) des Adapterelements (5) aufgenommen ist, der Halteabschnitt (8) mit dem Gegenabschnitt (9) derart in Eingriff ist, dass das Adapterelement (5) gegen eine Bewegung entlang der ersten Drehachse (z) gesichert ist,
wobei die kreisrunde Aufnahmeöffnung (6) entlang ihres Umfangs zumindest abschnittweise radial zur ersten Achse (z) verlaufende Zähne (10) aufweist, wobei die Zähne (10) derart ausgestaltet und dazu eingerichtet sind, mit einem Gegenelement (11) zusammenzuwirken, wobei das Gegenelement (11) derart in Eingriff mit den Zähnen (10) bringbar ist, dass eine von dem Gegenelement (11) ausführbare Drehbewegung um die erste Achse (z) eine Drehbewegung des Adapterelements (5) relativ zu dem Befestigungselement (4) induzieren kann.

2. Bodenbeleuchtungsmodul (1) nach Anspruch 1, wobei die von dem Gegenelement (11) ausführbare Drehbewegung eine gleichgerichtete Drehbewegung des Adapterelements (5) relativ zu dem Befestigungselement (4) induzieren kann.

3. Bodenbeleuchtungsmodul (1) nach einem der vorhergehenden Ansprüche, wobei das Adapterelement (5) zumindest einen Leuchtmittelträger-Haltebereich aufweist, wobei der Leuchtmittelträger-Haltebereich einen ersten Halteschenkel (12) und einen zweiten Halteschenkel (13) aufweist, wobei der Leuchtmittelträger (3), in einem Haltezustand, zwischen dem ersten Halteschenkel (12) und dem zweiten Halteschenkel (13) derart gehalten wird, dass der Leuchtmittelträger (3) gegen eine Bewegung entlang der zweiten Achse (x) gesichert ist, wobei in dem Haltezustand der Leuchtmittelträger (3) mit dem ersten Halteschenkel (12) und dem zweiten Halteschenkel (13) derart in Eingriff ist, dass der Leuchtmittelträger (3) um die zweite Achse (x) drehbar ist.

4. Bodenbeleuchtungsmodul (1) nach Anspruch 3, wobei sich der erste Halteschenkel (12) und der zweite Halteschenkel (13) von dem Halteabschnitt (8) des Adapterelements (5), im Wesentlich entlang der ersten Achse (z), weg erstrecken.

5. Bodenbeleuchtungsmodul (1) nach Anspruch 3 oder 4, wobei der erste Halteschenkel (12) eine erste Halteöffnung (12a) und der zweite Halteschenkel (13) eine zweite Halteöffnung (13a) aufweist, wobei der Leuchtmittelträger (3) einen ersten Haltevorsprung (3a) und einen zweiten Haltevorsprung (3b) aufweist, wobei in dem Haltezustand der erste Haltevorsprung (3a) in der ersten Halteöffnung (12a) und der zweite Haltevorsprung (3b) in der zweiten Halteöffnung (13a) derart formschlüssig aufgenommen ist, dass der Leuchtmittelträger (3) zwischen den beiden Halteschenkeln (12, 13) um die zweite Achse (x) drehbar ist.

6. Bodenbeleuchtungsmodul (1) nach einem der vorhergehenden Ansprüche, wobei das Befestigungselement (4) eine Einstellöffnung (14) aufweist, über welche das Gegenelement (11), zur Indizierung der Drehbewegung auf das Adapterelement (5), mit den umfangseitig radial verlaufenden Zähnen (10) der Aufnahmeöffnung (6) in Eingriff gebracht werden kann.

7. Bodenbeleuchtungsmodul (1) nach einem der vorhergehenden Ansprüche, wobei die erste Achse (z) und die zweite Achse (x) im Wesentlichen orthogonal zueinander orientiert sind.

8. Bodenbeleuchtungsmodul (1) nach einem der vorhergehenden Ansprüche, wobei in einem Zustand, in dem das Bodenbeleuchtungsmodul (1) an einem Kraftfahrzeug angebracht ist, die erste Achse (z) im Wesentlichen vertikal und die zweite Achse (x) im Wesentlichen horizontal orientiert ist.

9. Bodenbeleuchtungsmodul (1) nach einem der vorhergehenden Ansprüche, wobei das Adapterelement (5) ein erstes Fixiermittel aufweist, welches dazu eingerichtet ist, einen ersten Drehwinkel, um welchen das Adapterelement (5) relativ zu der Befestigungsvorrichtung (4) drehbar ist, zu fixieren.

10. Bodenbeleuchtungsmodul (1) nach einem der vorhergehenden Ansprüche, wobei das Adapterelement (5) ein zweites Fixiermittel aufweist, welches dazu eingerichtet ist, einen zweiten Drehwinkel, um welchen der Leuchtmittelträger (3) relativ zu dem Adapterelement (5) drehbar ist, zu fixieren.

11. Bodenbeleuchtungsmodul (1) nach einem der vorhergehenden Ansprüche, wobei die von dem Gegenelement (11) ausführbare Drehbewegung um die erste Achse (z), zur Indizierung einer gleichgerichteten Drehbewegung auf des Adapterelement (5), manuell erfolgen kann.

12. Bodenbeleuchtungsmodul (1) nach einem der vorhergehenden Ansprüche, wobei die Befestigungsvorrichtung (4) ein Rastelement (15) aufweist, welches dazu eingerichtet ist, das Bodenbeleuchtungsmodul (1) über eine Rastverbindung an einem Kraftfahrzeug zu befestigen.

13. Bodenbeleuchtungsmodul (1) nach Anspruch 12, wobei das Rastelement (15) zumindest eine Rastnase (15a), vorzugsweise mehrere Rastnasen, aufweist, welche sich von dem Aufnahmeabschnitt (7) der Befestigungsvorrichtung (4) im Wesentlichen parallel zur ersten Achse (z) weg erstrecken.

14. System, umfassend zumindest zwei Bodenbeleuchtungsmodule (1) nach einem der vorhergehenden Ansprüche, wobei ein erstes Bodenbeleuchtungsmodul (1) zur Erzeugung einer ersten Boden-Lichtverteilung (2a) und ein zweites Bodenbeleuchtungsmodul (1) zur Erzeugung einer zweiten Boden-Lichtverteilung (2a) eingerichtet ist, wobei vorzugsweise die erste Boden-Lichtverteilung (2a) und die zweite Boden-Lichtverteilung (2a) unterschiedlich ausgestaltet sind.

15. Kraftfahrzeug, umfassend zumindest ein Bodenbeleuchtungsmodul (1) nach einem der Ansprüche 1-13 oder ein System nach Anspruch 14.

## Claims

1. Floor lighting module (1) for a motor vehicle for generating a ground light distribution (2a), with which a ground can be illuminated laterally and/or underneath a motor vehicle, wherein the ground lighting module (1) is set up to adjust the ground light distribution (2a) about a first axis (z) and a second axis (x) which differs from the first axis, wherein the ground lighting module (1) can be fastened to a motor vehicle, wherein the ground lighting module (1) comprises the following:
- a light source (2) for generating the floor light distribution (2a),
- a light source carrier (3) to which the light source is attached
- a fastening device (4) for fastening the ground lighting module (1) to a motor vehicle,
- an adapter element (5) which is set up to enable the adjustment of the ground light distribution (2a) about the first axis (z) and the second axis (x), the adapter element (5) being mounted on the fastening device (4) so as to be rotatable about the first axis (z), wherein the illuminant carrier (3) is fastened to the adapter element (5) in such a way that a rotary movement of the adapter element (5) about the first axis (z) causes the illuminant carrier (3) to rotate about the first axis (z), and wherein the illuminant carrier (3) is mounted on the adapter element (5) so as to be rotatable about the second axis (x),
wherein
the adapter element (5) has a circular receiving opening (6), the fastening device (4) having a receiving section (7) of complementary design to the receiving opening, the fastening device (4) being received in the receiving opening (6) via the receiving section (7),
wherein the receiving opening (6) has a holding portion (8) and the fastening device (4) has a counter portion (9) corresponding to the holding portion (8), **characterized in that** the holding portion (8) and the counter portion (9) are designed with respect to one another in such a way that, in a receiving state in which the receiving section (7) of the fastening device (4) is received in the receiving opening (6) of the adapter element (5), the retaining section (8) engages with the mating section (9) in such a way that the adapter element (5) is secured against movement along the first axis of rotation (z),
wherein the circular receiving opening (6) has teeth (10) extending radially to the first axis (z) at least in sections along its circumference, wherein the teeth (10) are designed and arranged to cooperate with a counter element (11), wherein the counter element (11) can be brought into engagement with the teeth (10) in such a way that a rotary movement about the first axis (z) which can be executed by the counter element (11) can induce a rotary movement of the adapter element (5) relative to the fastening element (4).

2. Floor lighting module (1) according to claim 1, wherein the rotational movement that can be performed by the counter element (11) can induce a rotational movement of the adapter element (5) in the same direction relative to the fastening element (4).

3. Floor lighting module (1) according to one of the preceding claims, wherein the adapter element (5) has at least one illuminant carrier holding region, wherein the illuminant carrier holding region has a first holding leg (12) and a second holding leg (13), wherein the illuminant carrier (3), in a holding state between the first holding leg (12) and the second holding leg (13) in such a way that the illuminant carrier (3) is secured against movement along the second axis (x), wherein in the holding state the illuminant carrier (3) is engaged with the first holding leg (12) and the second holding leg (13) in such a way that the illuminant carrier (3) is rotatable about the second axis (x).

4. Floor lighting module (1) according to claim 3, wherein the first retaining leg (12) and the second retaining leg (13) extend away from the retaining portion (8) of the adapter element (5), substantially along the first axis (z).

5. Floor lighting module (1) according to claim 3 or 4, wherein the first holding leg (12) has a first holding opening (12a) and the second holding leg (13) has a second holding opening (13a), wherein the illuminant carrier (3) has a first holding projection (3a) and a second holding projection (3b), wherein, in the holding state, the first holding projection (3a) is positively received in the first holding opening (12a) and the second holding projection (3b) is positively received in the second holding opening (13a) in such a way that the illuminant carrier (3) is rotatable about the second axis (x) between the two holding limbs (12, 13).

6. Floor lighting module (1) according to one of the preceding claims, wherein the fastening element (4) has an adjustment opening (14), via which the counter element (11) can be brought into engagement with the circumferentially radially extending teeth (10) of the receiving opening (6) for indicating the rotary movement on the adapter element (5).

7. Floor lighting module (1) according to one of the preceding claims, wherein the first axis (z) and the second axis (x) are oriented substantially orthogonally to each other.

8. Floor lighting module (1) according to one of the preceding claims, wherein, in a state in which the floor lighting module (1) is attached to a motor vehicle, the first axis (z) is oriented substantially vertically and the second axis (x) is oriented substantially horizontally.

9. Floor lighting module (1) according to one of the preceding claims, wherein the adapter element (5) comprises a first fixing means which is arranged to fix a first angle of rotation about which the adapter element (5) is rotatable relative to the fastening device (4).

10. Floor lighting module (1) according to one of the preceding claims, wherein the adapter element (5) has a second fixing means which is set up to fix a second angle of rotation about which the illuminant carrier (3) is rotatable relative to the adapter element (5).

11. Floor lighting module (1) according to one of the preceding claims, wherein the rotational movement about the first axis (z), which can be performed by the counter element (11), can be performed manually for indicating a rectified rotational movement on the adapter element (5).

12. Floor lighting module (1) according to one of the preceding claims, wherein the fastening device (4) has a latching element (15) which is set up to fasten the floor lighting module (1) to a motor vehicle via a latching connection.

13. Floor lighting module (1) according to claim 12, wherein the latching element (15) has at least one latching lug (15a), preferably several latching lugs, which extend away from the receiving portion (7) of the fastening device (4) substantially parallel to the first axis (z).

14. System, comprising at least two ground lighting modules (1) according to one of the preceding claims, wherein a first ground lighting module (1) is set up to generate a first ground light distribution (2a) and a second ground lighting module (1) is set up to generate a second ground light distribution (2a), wherein preferably the first ground light distribution (2a) and the second ground light distribution (2a) are designed differently.

15. Motor vehicle, comprising at least one ground lighting module (1) according to one of claims 1-13 or a system according to claim 14.

## Revendications

1. Module d'éclairage de sol (1) pour un véhicule automobile pour générer une répartition de lumière au sol (2a), avec laquelle un sol peut être éclairé latéralement et/ou en dessous d'un véhicule automobile, le module d'éclairage de sol (1) étant conçu pour régler la répartition de lumière au sol (2a) autour d'un premier axe (z) et d'un deuxième axe (x) différent du premier, le module d'éclairage de sol (1) pouvant être fixé sur un véhicule automobile, le module d'éclairage de sol (1) comprenant ce qui suit :
- un moyen d'éclairage (2) pour générer la répartition de la lumière au sol (2a),
- un support de moyen d'éclairage (3), sur lequel le moyen d'éclairage est fixé,
- un dispositif de fixation (4) pour fixer le module d'éclairage du sol (1) sur un véhicule automobile,
- un élément adaptateur (5) qui est conçu pour permettre le réglage de la répartition de l'éclairage au sol (2a) autour du premier axe (z) et du deuxième axe (x), l'élément adaptateur (5) étant monté sur le dispositif de fixation (4) de manière à pouvoir tourner autour du premier axe (z), le support de moyen d'éclairage (3) étant fixé à l'élément adaptateur (5) de telle sorte qu'un mouvement de rotation de l'élément adaptateur (5) autour du premier axe (z) provoque une rotation du support de moyen d'éclairage (3) autour du premier axe (z), et le support de moyen d'éclairage (3) étant monté sur l'élément adaptateur (5) de manière à pouvoir tourner autour du deuxième axe (x),
où
l'élément adaptateur (5) présente une ouverture de réception circulaire (6), le dispositif de fixation (4) présentant une section de réception (7) de forme complémentaire à l'ouverture de réception, le dispositif de fixation (4) étant reçu dans l'ouverture de réception (6) par l'intermédiaire de la section de réception (7),
l'ouverture de réception (6) présentant une section de maintien (8) et le dispositif de fixation (4) présentant une section opposée (9) correspondant à la section de maintien (8), **caractérisé en ce que** la section de maintien (8) et la section opposée (9) sont formées l'une par rapport à l'autre de telle sorte que, dans un état de réception, dans lequel la section de réception (7) du dispositif de fixation (4) est reçue dans l'ouverture de réception (6) de l'élément d'adaptation (5), la section de retenue (8) est en prise avec la section opposée (9) de telle sorte que l'élément d'adaptation (5) est bloqué contre un mouvement le long du premier axe de rotation (z),
l'ouverture de réception circulaire (6) présente le long de sa périphérie des dents (10) s'étendant au moins par sections radialement par rapport au premier axe (z), les dents (10) étant conçues et adaptées pour coopérer avec un contre-élément (11), le contre-élément (11) pouvant être amené en prise avec les dents (10) de telle sorte qu'un mouvement de rotation autour du premier axe (z) exécutable par le contre-élément (11) peut induire un mouvement de rotation de l'élément adaptateur (5) par rapport à l'élément de fixation (4).

2. Module d'éclairage de sol (1) selon la revendication 1, dans lequel le mouvement de rotation exécutable par l'élément antagoniste (11) peut induire un mouvement de rotation de même sens de l'élément adaptateur (5) par rapport à l'élément de fixation (4).

3. Module d'éclairage de sol (1) selon l'une des revendications précédentes, dans lequel l'élément adaptateur (5) présente au moins une zone de maintien de support de lampe, la zone de maintien de support de lampe présentant une première branche de maintien (12) et une deuxième branche de maintien (13), le support de lampe (3), dans un état de maintien, entre la première branche de retenue (12) et la deuxième branche de retenue (13) de telle sorte que le support de moyen d'éclairage (3) soit empêché de se déplacer le long du deuxième axe (x), dans lequel, dans l'état de retenue, le support de moyen d'éclairage (3) est en prise avec la première branche de retenue (12) et la deuxième branche de retenue (13) de telle sorte que le support de moyen d'éclairage (3) puisse tourner autour du deuxième axe (x).

4. Module d'éclairage de sol (1) selon la revendication 3, dans lequel la première branche de retenue (12) et la deuxième branche de retenue (13) s'étendent en s'éloignant de la partie de retenue (8) de l'élément d'adaptation (5), sensiblement le long du premier axe (z).

5. Module d'éclairage de sol (1) selon la revendication 3 ou 4, dans lequel la première branche de retenue (12) présente une première ouverture de retenue (12a) et la deuxième branche de retenue (13) présente une deuxième ouverture de retenue (13a), le support de moyen d'éclairage (3) présentant une première saillie de retenue (3a) et une deuxième saillie de retenue (3b), dans l'état de maintien, la première saillie de maintien (3a) est logée par complémentarité de forme dans la première ouverture de maintien (12a) et la deuxième saillie de maintien (3b) est logée par complémentarité de forme dans la deuxième ouverture de maintien (13a) de telle sorte que le support de moyen d'éclairage (3) peut tourner autour du deuxième axe (x) entre les deux branches de maintien (12, 13).

6. Module d'éclairage de sol (1) selon l'une des revendications précédentes, dans lequel l'élément de fixation (4) présente une ouverture de réglage (14) par laquelle le contre-élément (11) peut être mis en prise avec les dents (10) de l'ouverture de réception (6) qui s'étendent radialement sur la périphérie, pour indiquer le mouvement de rotation sur l'élément adaptateur (5).

7. Module d'éclairage de sol (1) selon l'une des revendications précédentes, dans lequel le premier axe (z) et le deuxième axe (x) sont orientés de manière sensiblement orthogonale l'un par rapport à l'autre.

8. Module d'éclairage de sol (1) selon l'une quelconque des revendications précédentes, dans lequel, dans un état dans lequel le module d'éclairage de sol (1) est monté sur un véhicule automobile, le premier axe (z) est orienté sensiblement verticalement et le deuxième axe (x) est orienté sensiblement horizontalement.

9. Module d'éclairage de sol (1) selon l'une quelconque des revendications précédentes, dans lequel l'élément adaptateur (5) comprend un premier moyen de fixation agencé pour fixer un premier angle de rotation selon lequel l'élément adaptateur (5) peut être tourné par rapport au dispositif de fixation (4).

10. Module d'éclairage de sol (1) selon l'une quelconque des revendications précédentes, dans lequel l'élément adaptateur (5) comprend un deuxième moyen de fixation adapté pour fixer un deuxième angle de rotation selon lequel le support de lampe (3) peut tourner par rapport à l'élément adaptateur (5).

11. Module d'éclairage de sol (1) selon l'une des revendications précédentes, dans lequel le mouvement de rotation autour du premier axe (z) pouvant être effectué par le contre-élément (11) peut être effectué manuellement pour indiquer un mouvement de rotation dans le même sens sur l'élément adaptateur (5).

12. Module d'éclairage de sol (1) selon l'une quelconque des revendications précédentes, dans lequel le dispositif de fixation (4) comporte un élément d'encliquetage (15) agencé pour fixer le module d'éclairage de sol (1) sur un véhicule automobile par l'intermédiaire d'une liaison d'encliquetage.

13. Module d'éclairage de sol (1) selon la revendication 12, dans lequel l'élément d'encliquetage (15) comporte au moins un ergot d'encliquetage (15a), de préférence plusieurs ergots d'encliquetage, s'étendant à partir de la partie de réception (7) du dispositif de fixation (4), sensiblement parallèlement au premier axe (z).

14. Système comprenant au moins deux modules d'éclairage du sol (1) selon l'une des revendications précédentes, dans lequel un premier module d'éclairage du sol (1) est agencé pour générer une première répartition de la lumière du sol (2a) et un deuxième module d'éclairage du sol (1) est agencé pour générer une deuxième répartition de la lumière du sol (2a), la première répartition de la lumière du sol (2a) et la deuxième répartition de la lumière du sol (2a) étant de préférence de conception différente.

15. Véhicule automobile comprenant au moins un module d'éclairage du sol (1) selon l'une quelconque des revendications 1 à 13 ou un système selon la revendication 14.
